# EUROPÄISCHE PATENTSCHRIFT

(11) **EP 1 262 694 B1**
(45) Veröffentlichungstag und Bekanntmachung des Hinweises auf die Patenterteilung: **25.01.2006**
(21) Anmeldenummer: 02011111.8
(22) Anmeldetag: 18.05.2002
(51) Int. Cl.: F16J 9/26

(54) **Kolbenring mit einer Oxid-Nitrid-Verbundschicht**
Piston ring having an oxide-nitride-bonded layer
Segment de piston avec un adhérence d'oxyde-nitride

(30) Priorität: 01.06.2001 DE 10127020
(43) Veröffentlichungstag der Anmeldung: 04.12.2002
(73) Patentinhaber: Federal-Mogul Friedberg GmbH, 86316 Friedberg (DE)
(72) Erfinder: Horn, Ehrenfried, 86453 Dasing (DE); Widmann, Rudolf, 86556 Kuhbach (DE); Hoppe, Steffen, Dr., 51491 Overath (DE)

(56) Entgegenhaltungen:
- EP-A- 0 534 010
- DE-A- 3 502 143
- US-A- 4 496 401
- US-A- 4 563 223
- US-B1- 6 209 881

## Beschreibung

Die Erfindung beschreibt einen Kolbenring zum Einsatz in einem Zylinder einer Verbrennungskraftmaschine, der auf der gesamten Oberfläche nitriergehärtet ist, wobei die Nitrierschicht aus einer Ausscheidungsschicht und einer Verbindungsschicht besteht, wobei der Kolbenring aus einem niedriglegierten Eisenbasiswerkstoff besteht.

Unter den thermochemischen Behandlungsverfahren wird das Nitrieren bzw. Nitrokarburieren von Bauteilen seit langem weltweit industriell eingesetzt, weil hiermit eine wirksame Verbesserung der Randschichteigenschaften hinsichtlich des Verschleiß-, Korrosions- und Dauerschwingfestigkeitsverhaltens erreicht werden kann. Die Hauptanwendungsgebiete in Automobilen liegen dabei in Bereichen, in denen Bauteile hohen Gleitbeanspruchungen unterworfen sind, wie z. B. Stirnräder, Getriebewellen oder Kolbenringen.
Beim Nitrieren bzw. Nitrokarburieren dringt der Kohlenstoff bzw. Stickstoff in die Oberfläche der Bauteile ein, so dass es zu Wechselwirkungen mit den Versetzungen kommt und damit zu einer Veränderung der Werkstoffeigenschaften. Der gelöste wie auch der ausgeschiedene Stickstoff bzw. Kohlenstoff erhöhen die Härte, und zwar um so mehr, je größer der Anteil an nitridbildenden Legierungselementen im Bauteil ist. Nitridschichten können grundsätzlich in zwei Schichtbereiche eingeteilt werden, in eine erste Diffusionschicht und eine zweite Verbindungsschicht, dabei bildet sich im äußeren Bereich der Oberfläche der Verbindungsschicht ein poröser und harter Bereich aus, der das Einlaufverhalten der durch Gleitreibung beanspruchten Bauteile negativ beeinflussen kann. Bezogen auf den Kolbenring kann es zu Mirkoverschweißungen an der Oberfläche, zu einem erhöhten Kolbennutverschleiß und zu Riefen in der Zylinderwand kommen.

Aus diesem Grund wird in der DE 35 02 143 C2 eine Beschichtung für einen Kolbenring vorgeschlagen, bei der die harte Verbundschicht entfernt und zusätzlich eine das Einlaufverhalten positiv beeinflussende Oxidschicht auf die Diffusionsschicht aufgebracht wird. Die Oxidschicht ist dabei so weich, dass sie sich der Zylinderwand zu Beginn des Betriebs gut anzupassen vermag, um damit die sonst anfänglich auftretenden negativen Einlauferscheinungen zu unterbinden. Darüber hinaus weisen Oxidschichten eine gute Korrosionsbeständigkeit auf.
Die Ansprüche aus der DE 35 02 143 C2 beziehen sich auf einen hochlegierten Stahl der nitriergehärtet ist, wobei unbeachtet bleibt, dass sich das Nitrieren von hochlegierten Stählen negativ auf die Korrosionsbeständigkeit auswirkt. Im folgenden wird die aufgebrachte Verbundschicht wieder entfernt, was bedeutet, dass erstens ein zusätzlicher Verfahrensschritt notwendig ist und zweitens wird die harte, tragende Schicht auf dem Kolbenring entfernt.

Das Aufbringen einer Oxidschicht auf eine nitrierte Eisenlegierung zur Verbesserung der Korrosionsbeständigkeit mit gleichzeitig dekorativem Aussehen der Oberflächen und einer günstigen Voraussetzung für die Aufnahme von Schmiermitteln wird in der DD 119 822 beschrieben. Hierbei handelt es sich allgemein um Eisen und Eisenlegierungen, insbesondere für Zerspanungswerkzeuge, die nitriert und anschließend in einem sauerstoffhaltigen Medium oxidiert werden, so dass sich eine für Zerspanungswerkzeuge günstige etwa 5µm starke oxidische Deckschicht ausbildet. Diese 5µm starken Deckschichten sind aber für Bauteile, die einer Gleitreibung unterliegen, ungeeignet, da sich hierin Risse bilden können. Dabei werden vorzugsweise einphasige, oxidische Deckschichten der Form Fe₃O₄ gebildet. Auch die Verbindungsschichten werden einphasig ausgebildet und liegen beispielsweise als Fe₂₋₃N Schichten vor. Die Ausbildung von mehrphasigen oxidischen Deckschichten oder Verbindungsschichten ist dabei nicht vorgesehen und kann der Schrift nicht entnommen werden.

Eine allgemeine Beschreibung eines Verfahrens zur Erzeugung von Korrosions- und Verschleißschutzschichten auf Eisenbasiswerkstoffen, bei dem oberflächennahe Bereiche mit Stickstoff, Kohlenstoff und Sauerstoff angereichert werden, kann der DE 195 25 182 C2 entnommen werden. Die hierin aufgeführten Verfahrensschritte gliedern sich in ein Nitrocarburieren des Eisenbasiswerkstoffes zur Bildung einer aus Eisenkarbonitriden bestehenden Verbindungsschicht, ein Aktivieren der Oberfläche des Werkstoffs in einem plasmagestützten Unterdruckverfahren und einem Oxidieren des Werkstoffs zur Bildung einer geschlossenen Oxidschicht. Ein Hinweis darauf, dass dieses Verfahren für Bauteile in Verbrennungskraftmaschinen, insbesondere bei niedriglegierten Kolbenringen, angewendet werden soll, ist der Schrift nicht zu entnehmen.
Aus der US 6209881 ist ein gatttungsgemäßer Kolbenring zu entnehmen, der auf der Lauffläche eine weiche Einlaufschicht aufweist.

Der Erfindung liegt die Aufgabe zugrunde, den beschriebenen Stand der Technik zu erweitern und einen Kolbenring zu entwickeln, der auf der gesamten Oberfläche eine verbesserte Verschleißfestigkeit aufweist wobei gleichzeitig das Einlaufverhalten und die Korrosionsbeständigkeit verbessert und wobei der Verschleiß auf der Kolbenringoberfläche sowie in der Kolbenringnut minimiert wird ohne das die Herstellungskosten erhöht werden.

Diese Aufgabe wird erfindungsgemäß durch die Merkmaledes Patentanspruchs 1 gelöst, vorteilhafte Weiterbildungen der Erfindung sind in den Unteransprüchen dokumentiert.

Der erfindungsgemäße Gedanke löst die gestellte Aufgabe dadurch, dass der Kolbenring aus einem niedriglegierten Eisenbasiswerkstoff besteht und dass auf die Verbindungsschicht eine Oxidschicht aufgebracht ist. Die dabei zur Erzeugung der Ausscheidungs- und Verbindungsschicht eingesetzten Nitrierverfahren sind das Gas-Normaldruck- und Plasma-Unterdruck-Verfahren.
Hierbei bildet sich in dem niedriglegierten Werkstoff eine Ausscheidungsschicht, die aus einem oder beiden der Elemente Stickstoff und Kohlenstoff gebildet ist und in der Ausscheidungen als Fe₄N und/oder Sondernitride vorliegen.
Über der Ausscheidungsschicht ist eine mehrphasige, verschleißbeständige Verbindungsschicht angeordnet, wobei die Dicke der Verbindungsschicht zwischen 30µm und 1000µm liegen kann. In den Versuchen hat sich eine Schichtdicke von 200-500µm als vorteilhaft erwiesen. Durch die in den Werkstoff eingebrachten Elemente: Stickstoff und Kohlenstoff bildet sich auf dem Werkstoff eine mehrphasige Verbindungsschicht aus, in der die Elemente als Verbindungen aus Eisennitriden oder Eisenkarbonnitriden enthalten sind. Vorzugsweise liegen die Elemente als Fe₂₋₃N und/oder Fe₂₋₃NC und/oder Fe₄N und/oder Fe₄NC und/oder als Sondernitrid oder Sonderkarbonnitrid, wie beispielsweise CrN oder CrCN, vor. Dabei kann die Verbindungsschicht in einem Anwendungsfall ausschließlich aus Eisennitriden oder in einem weiteren Anwendungsfall aus Eisenkarbonitriden und/oder Sonderkarbonnitriden und/oder Sondernitriden bestehen.
Die Kolbenringe besitzen als äußere, das Einlaufverhalten positiv beeinflussende Schicht eine Oxidschicht. Die Oxidschicht, die mit einer Dicke von 1-4 µm vorliegt ist aus 2- und 3-wertigen Eisenoxiden der Form Hämatit und Magnetit gebildet.
Durch das Vorhandensein der Oxidschicht auf dem Kolbenring wird das Einlaufverhalten wesentlich verbessert. So führt die Oxidschicht zu einer Verminderung des Reibkoeffizienten und wirkt somit während der Einlaufphase quasi als Gleitmittel, so dass die harten Nitride die Oberflächen der Gleitpartner, wie beispielsweise die Zylinderlaufbuchse, die Kolbenringnut oder die Feder an der Innenumfangsoberfläche des Kolbenrings, nicht beschädigen können.
Ein weiterer wesentlicher Vorteil der mehrphasigen Oxidschicht ist die deutliche Erhöhung des Widerstandes des Werkstoffs gegen korrosive Medien, wie beispielsweise Chloride und Sulfide, und Säuren.

## Patentansprüche

1. Kolbenring zum Einsatz in einem Zylinder einer Verbrennungskraftmaschine, der auf der gesamten Oberfläche nitriergehärtet ist, wobei die Nitrierschicht aus einer Ausscheidungsschicht und einer Verbindungsschicht besteht wobei der Kolbenring aus einem niedriglegierten Eisenbasiswerkstoff besteht **dadurch gekennzeichnet, dass** auf die Verbindungsschicht eine Oxidschicht aufgebracht ist und die Oxidschicht mit einer Dicke von 1-4 µm vorliegt und aus 2- und 3-wertigen Eisenoxiden der Form Hämatit und Magnetit gebildet ist und dass die Ausscheidungsschicht durch Ferrit mit darin gelöstem Stickstoff und/oder Kohlenstoff gebildet ist und in der Ausscheidungen als Fe₄N und/oder Sondernitride vorliegen.

2. Kolbenring für eine Verbrennungskraftmaschine nach Anspruche 1, **dadurch gekennzeichnet, dass** die Verbindungsschicht eine mehrphasige Verbindungsschicht ist, die aus Fe₂₋₃N und/oder Fe₂₋₃NC und/oder Fe₄N und/oder Fe₄NC und/oder Sondernitriden gebildet ist.

3. Kolbenring für eine Verbrennungskraftmaschine nach einem der Ansprüche 1 bis 2, **dadurch gekennzeichnet, dass** die Nitrierschicht mittels eines Gas-Normaldruck-Verfahrens erzeugt ist.

4. Kolbenring für eine Verbrennungskraftmaschine nach einem der Ansprüche 1 bis 2, **dadurch gekennzeichnet, dass** die Nitrierschicht mittels eines Plasma-Unterdruck-Verfahrens erzeugt ist.

## Claims

1. Piston ring for use in a cylinder of an internal combustion engine, which is nitride-hardened on the entire surface, the nitride layer comprising a deposition layer and a compound layer, the piston ring comprising a low-alloy iron-based material, **characterised in that** an oxide layer is applied on the compound layer and the oxide layer is present with a thickness of 1 - 4 µm and is formed from 2- and 3-valent iron oxides of the haematite and magnetite form, and **in that** the deposition layer is formed by ferrite with nitrogen and/ or carbon dissolved therein and in which deposits are present as Fe₄N and/or special nitrides.

2. Piston ring for an internal combustion engine according to claim 1, **characterised in that** the compound layer is a multi-phase compound layer, which is formed from Fe₂₋₃N and/or Fe₂₋₃NC and/or Fe₄N and/or Fe₄NC and/or special nitrides.

3. Piston ring for an internal combustion engine according to one of the claims 1 to 2, **characterised in that** the nitride layer is produced by means of a gas normal pressure method.

4. Piston ring for an internal combustion engine according to one of the claims 1 to 2, **characterised in that** the nitride layer is produced by means of a plasma low pressure method.

## Revendications

1. Segment de piston destiné à être utilisé dans un cylindre d'une machine à combustion interne, le segment de piston étant durci par nitruration sur la totalité de sa surface supérieure, la couche de nitruration étant constituée à partir d'une couche de précipitation et d'une couche de liaison, le segment de piston étant constitué à partir d'un matériau ferreux faiblement allié, **caractérisé en ce qu'**une couche d'oxyde est appliquée sur la couche de liaison et la couche d'oxyde présente une épaisseur de 1-4 µm et est réalisée à partir d'oxyde de fer de valence 2 et 3 de forme hématite ou magnétite et **en ce que** la couche de précipitation est réalisée à partir de ferrite avec de l'azote et/ou du carbone dissout à l'intérieur et dans laquelle des précipités sont présents sous la forme de Fe₄N et/ou de nitrures spéciaux.

2. Segment de piston pour une machine à combustion interne selon la revendication 1, **caractérisé en ce que** la couche de liaison est une couche de liaison à plusieurs phases, qui est réalisée à partir de Fe₂₋₃N et/ou de Fe₂₋₃NC et/ou de Fe₄N et/ou de Fe₄NC et/ou de nitrures spéciaux.

3. Segment de piston pour une machine à combustion interne selon l'une des revendications 1 et 2, **caractérisé en ce que** la couche est obtenue au moyen d'un procédé à pression normale au gaz.

4. Segment de piston pour une machine à combustion interne selon l'une des revendications 1 et 2, **caractérisé en ce que** la couche de nitruration est obtenue au moyen d'un procédé de dépression au plasma.
